# EUROPÄISCHE PATENTANMELDUNG

(11) **EP 3 159 698 A1**
(43) Veröffentlichungstag der Anmeldung: **26.04.2017**
(21) Anmeldenummer: 15190821.7
(22) Anmeldetag: 21.10.2015
(51) Int. Cl.: G01N 35/04

(54) **VEREINZELUNGSSYSTEM**

(71) Anmelder: Siemens Healthcare Diagnostics Products GmbH, 35041 Marburg (DE)
(72) Erfinder: Anderle, Klaus, 61476 Kronberg (DE); Suder, Ingo, 66482 Zweibrücken (DE)

(57) **Zusammenfassung**

Vereinzelungssystem (1) umfassend einen Behälter (5) für eine Mehrzahl von Gegenständen und einen Vereinzeler (3) mit einer Vereinzeleröffnung (4) zum Vereinzeln der Gegenstände, der Behälter (5) umfassend eine erste Trennwand (6) mit einer ersten Öffnungshöhe (7) und einer zweiten Trennwand (8) mit einer zweiten Öffnungshöhe(9), wobei die zweite Trennwand (8) zwischen der ersten Trennwand (6) und der Vereinzeleröffnung (4) des Vereinzelers (3) angeordnet ist und wobei die zweite Öffnungshöhe (9) geringer als die erste Öffnungshöhe (7) ist.

## Beschreibung

Die Erfindung liegt auf dem Gebiet der automatischen in vitro-Diagnostiksysteme. Gegenstand der Erfindung ist ein Vereinzelungssystem umfassend einen Behälter für eine Mehrzahl von Gegenständen und einen Vereinzeler mit einer Vereinzeleröffnung zum Vereinzeln der Gegenstände für einen automatisch arbeitenden Analysator zur Untersuchung von biologischen Körperflüssigkeiten.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Es ist bekannt, dass in automatisch arbeitenden Analysatoren, die zur Untersuchung von biologischen Körperflüssigkeiten eingesetzt werden, die benötigten Reagenzien mittels einer Pipettiervorrichtung mit einer Pipettiernadel in eine Messküvette eingefüllt werden. Die Messküvette wird dabei mit einem Küvettengreifer innerhalb des automatischen Analysegerätes zu verschiedenen Positionen mittels eines Roboterarms automatisch verfahren, der Teil einer Roboterstation ist. Nach der Messung wird die benutzte Messküvette zur Entsorgung durch einen Abfallschacht in einen Abfallbehälter verbracht.

Die Messküvetten werden üblicherweise als Schüttgut bereitgestellt. Ein Vereinzelungssystem umfasst beispielsweise einen Behälter mit einer Bodenfläche mit einem Vorratsbereich für eine Mehrzahl von Küvetten und einen Vereinzeler mit einer Vereinzelungsöffnung zum Vereinzeln der Küvette. Der Vereinzeler umfasst beispielsweise einen aktiven Bereich. Der Behälter kann eine Trennwand mit einer unteren Kante innerhalb des Behälters mit einer freien Öffnung zwischen der unteren Kante und der Bodenfläche mit einer Öffnungshöhe zur Reduktion des Drucks der sich im Behälter befindenden Küvetten auf die Vereinzeleröffnung des Vereinzelers umfassen.

Die Küvetten fließen in verschiedenen Bereichen des Behälters mit unterschiedlicher Geschwindigkeit zum Vereinzeler. In manchen Bereichen des Behälters fließen die Küvetten schneller und in anderen Bereichen fließen sie langsamer. Je nach Bereich unterliegt die Geschwindigkeit der Küvetten auch teilweise starken zeitlichen Schwankungen. Besonders problematisch sind Bereiche in der Nähe des Vereinzelers, in denen sich die Küvetten nur sehr ungleichmäßig oder sporadisch bewegen und es vergleichsweise häufig zu Relativbewegungen zwischen Küvetten kommt. Hierdurch verkratzen die Küvetten, und es wird Abrieb erzeugt.

Die Geschwindigkeit, mit der die Küvetten vom Vorratsbereich zum Vereinzeler fließen, hängt von der freien Öffnungshöhe der Trennwand über dem Boden des Behälters ab. Je größer die Öffnungshöhe ist, umso schneller und ungestörter können die Küvetten zum Vereinzeler fließen. Gleichzeitig wächst jedoch die Dicke der Schicht aus Küvetten über dem Vereinzeler und der Vereinzeleröffnung. Mit wachsender Dicke dieser Schicht nimmt die Bewegungsfähigkeit der Küvetten im aktiven Bereich des Vereinzelers ab und umso länger dauert es im Durchschnitt, bis eine Küvette sich im Bereich des Vereinzelers so orientiert, dass sie weiter prozessiert werden kann. Dies kann zu Verzögerungen und einem geringerem Durchsatz von Küvetten und damit zu einem höheren Kostenaufwand pro abzuarbeitender Küvette führen. Weiter steigt die Wahrscheinlichkeit stark, dass Küvetten im aktiven Bereich des Vereinzelers zerkratzt und beschädigt werden und für optische Messungen teilweise nicht mehr oder nur noch eingeschränkt verwendbar sind.

Ähnliche Probleme wie bei den Küvetten ergeben sich auch bei anderen Verbrauchsartikeln wie z.B. austauschbaren Pipettenspitzen.

Es ist daher Aufgabe der Erfindung, ein Vereinzelungssystem für Küvetten, die als Schüttgut vorliegen, zur Verfügung zu stellen, welches einen erhöhten Durchsatz von Küvetten und damit eine Reduktion des Kostenaufwands ermöglicht und gleichzeitig ein Zerkratzen oder andere Beschädigungen der Küvetten vermeidet.

### Diese Aufgabe wird erfindungsgemäß durch die im Folgenden beschriebenen Gegenstände und Verfahren gelöst.

Es wurde gefunden, dass ein verbessertes Vereinzelungssystem erreicht werden kann, wenn eine zweite Trennwand mit einer zweiten unteren Kante und mit einer zweiten Öffnung zwischen der zweiten unteren Kante und der Bodenfläche mit einer zweiten Öffnungshöhe vorgesehen ist. Die zweite Trennwand ist dabei zwischen einer ersten Trennwand und der Vereinzeleröffnung des Vereinzelers angeordnet, und die zweite Öffnungshöhe ist geringer als die Öffnungshöhe der ersten Trennwand.

Dies hat den Vorteil, dass die Dicke der Schicht aus Küvetten über dem Vereinzeler und der Vereinzeleröffnung des Vereinzelers aufgrund der zweiten Öffnungshöhe festgelegt und verringert werden kann, was zur Abnahme des Drucks auf die Küvetten im Bereich der Vereinzeleröffnung des Vereinzelers führt. Dies bewirkt, dass Zerkratzen oder andere Beschädigungen der Küvetten vermieden werden. Gleichzeitig kann durch die Wahl der ersten Öffnungshöhe der ersten Trennwand die Geschwindigkeit, mit der die Küvetten vom Vorratsbereich zum Vereinzeler fließen, festgelegt und optimiert werden, ohne nachteilige Effekte im Bereich des aktiven Bereichs des Vereinzelers zu bewirken. Dies bewirkt, dass ein erhöhter Durchsatz von Küvetten und damit eine Reduktion des Kostenaufwands ermöglicht wird.

Gegenstand der vorliegenden Erfindung ist also ein Vereinzelungssystem umfassend einen Behälter mit einer Bodenfläche für eine Mehrzahl von Gegenständen und einen Vereinzeler mit einer Vereinzeleröffnung zum Vereinzeln der Gegenstände, der Behälter umfassend eine erste Trennwand mit einer ersten unteren Kante innerhalb des Behälters mit einer ersten Öffnung zwischen der ersten unteren Kante und der Bodenfläche mit einer ersten Öffnungshöhe, wobei der Behälter eine zweite Trennwand mit einer zweiten unteren Kante innerhalb des Behälters mit einer zweiten Öffnung zwischen der zweiten unteren Kante und der Bodenfläche mit einer zweiten Öffnungshöhe umfasst, wobei die zweite Trennwand zwischen der ersten Trennwand und der Vereinzeleröffnung des Vereinzelers angeordnet ist und wobei die zweite Öffnungshöhe geringer als die erste Öffnungshöhe ist.

Die erste Trennwand mit der ersten unteren Kante innerhalb des Behälters und mit der ersten Öffnung zwischen der ersten unteren Kante und der Bodenfläche mit der ersten Öffnungshöhe bewirkt in bevorzugter Ausgestaltung eine Reduktion des Drucks der sich im Behälter befindenden Gegenstände auf die Vereinzeleröffnung des Vereinzelers.

Die zweite Trennwand zwischen der ersten Trennwand und der Vereinzeleröffnung des Vereinzelers bewirkt in bevorzugter Ausgestaltung eine Festleg der Höhe der Schicht der Gegenstände über der Vereinzeleröffnung des Vereinzelers.

Bei der Vereinzeleröffnung handelt es sich um eine Öffnung, mit deren Hilfe die Vereinzelung der Gegenstände im Vereinzelungssystem vorgenommen wird. Durch die Vereinzeleröffnung kann jeweils nur ein Gegenstand zu einem Zeitpunkt hindurchtreten. Die Vereinzeleröffnung befindet sich somit zwischen einem Bereich des Vereinzelungssystems, in dem die Gegenstände als Schüttgut ungeordnet vorliegen und einem weiteren Bereich des Vereinzelungssystems, in dem die Gegenstände vereinzelt, beziehungsweise geordnet, vorliegen. Beispielsweise werden die Gegenstände nach Durchtritt durch die Vereinzelungsöffnung in einem Schlauch oder einem Rohr einzeln hintereinander aufgereiht angeordnet. Mittels einer weiteren Öffnung in dem Schlauch oder Rohr können dann z.B. einzelne Gegenstände entnommen werden. Abhängig von der Ausgestaltung des Vereinzelungssystems und insbesondere der Vereinzeleröffnung sowie der geometrischen Form der Gegenstände, kann es vorgesehen sein, dass die Gegenstände jeweils nur in einer bestimmten Orientierung durch die Vereinzeleröffnung hindurchtreten können.

In bevorzugter Ausführung ist die zweite Öffnungshöhe größer als oder gleich dem eineinhalbfachen Durchmesser des Querschnitts eines Gegenstandes. Dies hat den Vorteil, dass sich Gegenstände weniger wahrscheinlich unter der zweiten Trennwand verklemmen.

In weiterer bevorzugter Ausführung des Vereinzelungssystems sind die erste Trennwand und die zweite Trennwand parallel zueinander angeordnet. Dies hat den Vorteil, dass die Flussgeschwindigkeit der Gegenstände und die Dicke der Schicht aus Gegenständen über dem Vereinzeler und der Vereinzeleröffnung des Vereinzelers besonders einfach reguliert werden kann.

In weiterer bevorzugter Ausführung des Vereinzelungssystems ist die zweite Trennwand an die erste Trennwand angebaut, z.B. mittels geeigneter Verbindungselemente. Dies hat den Vorteil, dass die zweite Trennwand besonders einfach und kostengünstig im Behälter befestigt werden kann. Weiter kann eine zweite Trennwand so besonders einfach auch bei bestehenden Vereinzelungssystemen mit einer ersten Trennwand nachgerüstet werden.

In vorteilhafter Ausgestaltung umfasst das Vereinzelungssystem mindestens ein Kunststoffspritzteil. Vorteilhafterweise sind der Behälter, die erste Trennwand und/oder die zweite Trennwand, ein Kunststoffspritzteil. Dies hat den Vorteil, dass das Vereinzelungssystem besonders einfach und kostengünstig gefertigt werden kann.

Alternativ sind die erste Trennwand und/oder die zweite Trennwand lösbar mit dem Behälter verbunden. In weiterer vorteilhafter Ausgestaltung ist die erste Trennwand lösbar mit der zweiten Trennwand verbunden.

Bevorzugt handelt es sich bei den Gegenständen beispielsweise um Küvetten oder Pipettenspitzen.

Bevorzugt handelt es sich bei den Gegenständen weiter um Produkte, die nur einmal verwendet und dann entsorgt bzw. ersetzt werden.

In bevorzugter Ausführung des Vereinzelungssystems umfasst das Vereinzelungssystem einen Aktuator, der mechanische Bewegung generieren und auf den Behälter übertragen kann. Beispielsweise umfasst der Aktuator einen automatisch bewegbaren Hubmagnet, der klopfende Bewegungen gegen den Behälter ausführen kann. Dies hat den Vorteil, dass die Gegenstände mittels Bewegung des Aktuators in gleichmäßigeren Fluss gebracht oder gehalten werden können. Auch können Verklemmungen mittels Bewegung des Aktuators gelöst werden.

In weiterer bevorzugter Ausführung des Vereinzelungssystems ist der Aktuator am Behälter befestigt, bevorzugt an der Außenseite des Behälters. Dies hat den Vorteil, dass der gesamte Behälter oder Teile des Behälters mittels des Aktuators in Schwingung versetzt werden können, was einen besonders gleichmäßigen Fluss der Gegenstände im Behälter bewirken kann und/oder Verklemmungen besonders effektiv gelöst werden können.

Der Vereinzeler umfasst vorteilhafterweise einen aktiven Bereich.

Bei dem aktiven Bereich des Vereinzelers handelt es sich um den Bereich innerhalb des Behälters, in dem eine Umordnung der Gegenstände durch eine Bewegung des Vereinzelers in dessen Betriebszustand stattfindet. Die Umordnung der Gegenstände durch den Vereinzeler bewirkt, dass die Gegenstände z.B. vereinzelt oder in einer bestimmten Ordnung angeordnet werden können.

Der aktive Bereich des Vereinzelers umfasst beispielsweise eine bewegbare Schaufel. Bevorzugt wird die Schaufel automatisch von einem Motor angetrieben und führt im Betrieb des Vereinzelers bevorzugt eine Hubbewegung um eine Achse aus. In weiteren bevorzugten Ausführungen führt der Vereinzeler eine rotatorische, ellipsenförmige oder lineare Bewegung aus. Die lineare Bewegung wird bevorzugt abwechselnd in entgegen gerichtete Richtungen ausgeführt.

In einer bevorzugten Ausführung des Vereinzelungssystems umfasst der aktive Bereich des Vereinzelers zwei zueinander parallele Flächen mit einer dazwischenliegenden Stufe. Dies hat den Vorteil, dass die aktive Fläche des Vereinzelers vergrößert wird und damit die Wahrscheinlichkeit, dass sich Gegenstände im Vereinzeler entsprechend orientieren, erhöht wird. Weiter bewirkt die Stufe, dass die Gegenstände unter einem Winkel nach oben zueinander zu liegen kommen und sich nicht verklemmen. Ohne die Stufe verklemmen sich Gegenstände in einem Vereinzeler mit einer vergleichbar großen aktiven Fläche wesentlich häufiger.

In weiterer bevorzugter Ausführungsform des Vereinzelungssystems umfasst der aktive Bereich des Vereinzelers drei, vier, fünf oder mehr, besonders bevorzugt drei, zueinander parallele Flächen, wobei zwischen jeweils zwei der Flächen sich jeweils eine dazwischenliegende Stufe befindet.

In weiterer bevorzugter Ausführung ist mindestens eine der Flächen, bevorzugt alle der Flächen, in der Richtung, in der der Vereinzeler seine Bewegung ausführt, in ihrer Ausdehnung kleiner als die Höhe der Küvetten. Dies hat den Vorteil, dass sich die Küvetten weniger wahrscheinlich ineinander verhaken oder verklemmen.

In weiterer bevorzugter Ausführungsform des Vereinzelungssystems ist der Behälter trichterförmig ausgestaltet. Dies hat den Vorteil, dass die Gegenstände besonders einfach in den Behälter eingefüllt werden können und besonders zuverlässig in Richtung des aktiven Bereichs des Vereinzelers durch Ausnutzung der Schwerkraft fließen können.

In weiterer bevorzugter Ausführungsform des Vereinzelungssystems umfasst der Behälter im Innern keine Wandfläche senkrecht zur Hauptflussrichtung der Gegenstände in Richtung Vereinzeleröffnung des Vereinzelers. Dies trifft bevorzugt auch auf die Wandflächen der ersten und/oder zweiten Trennwand zu. Dies hat den Vorteil, dass die Gegenstände auf direkterem Weg im Behälter in Richtung des Vereinzelers fließen. Bereiche, in denen Gegenstände zwar durch den aktiven Bereich des Vereinzelers in Bewegung gehalten werden, sich jedoch nicht oder nur geringfügig in Richtung der Vereinzeleröffnung bewegen, werden so vermieden. Dies verringert die Wahrscheinlichkeit, dass es zu Abrieb, Verkratzung oder anderen Beschädigungen der Gegenstände durch Wechselwirkung mit anderen Gegenständen oder mit dem Vereinzelungssystem kommt. Weiter wird das Entstehen von Bereichen im Behälter vermieden, in denen sich die Gegenstände nicht oder nur geringfügig bewegen. Dies hat beispielsweise auch den Vorteil, dass das gegenseitige Blockieren von Gegenständen vermieden wird.

In weiterer bevorzugter Ausführung des Vereinzelungssystems bewegen sich die Gegenstände aufgrund der Gravitationskraft innerhalb des Behälters in Richtung der Vereinzelungsöffnung des Vereinzelers. Dies hat den Vorteil, dass auf einen Aktuator oder andere Mittel, die Gegenstände in Bewegung zu bringen oder in Bewegung zu halten verzichtet werden kann. Dies kann auch zu erheblichen Kostenvorteilen führen und die Fehleranfälligkeit im Betrieb verringern.

Ein weiterer Gegenstand der Erfindung ist die Verwendung eines erfindungsgemäßen Vereinzelungssystems in einem automatischen Analysegerät.

Ein weiterer Gegenstand der Erfindung ist ein automatisches Analysegerät umfassend mindestens ein erfindungsgemäßes Vereinzelungssystem. Das Analysegerät umfasst weiter vorteilhafterweise mindestens eine Pipettiereinheit und mindestens eine Messeinrichtung zum optischen und/oder elektronischen quantitativen Nachweis von mindestens einem Analyten in einer Probe.

In bevorzugter Ausgestaltung umfasst das automatische Analysegerät weiter mindestens eine Aufnahmeposition für eine Küvette, bevorzugt mindestens zwei Aufnahmepositionen für jeweils eine Küvette. Dies hat den Vorteil, dass eine oder mehrere Küvetten in dem automatischen Analysegerät in Aufnahmepositionen verbracht und dort z.B. analysiert werden können.

In bevorzugter Ausgestaltung umfasst das automatische Analysegerät weiter mindestens einen automatischen Roboterarm zum Transfer von mindestens einer Küvette. Dies hat den Vorteil, dass der Transfer von Küvetten innerhalb des Analysegeräts automatisch erfolgen kann.

Ein weiterer Gegenstand der Erfindung ist ein Verfahren zum Vereinzeln von Küvetten in einem erfindungsgemäßen automatischen Analysegerät umfassend die Verfahrensschritte
- Befüllen des Behälters mit einer Mehrzahl von Küvetten und
- Vereinzelung einer Küvette mittels des Vereinzelers und
- Verbringen der Küvette in eine Aufnahmeposition.

In bevorzugter Ausgestaltung umfasst das Verfahren weiter den Verfahrensschritt
- Transfer der Küvette zwischen zwei Aufnahmepositionen.

Bevorzugt erfolgt der Transfer einer Küvette zwischen zwei Aufnahmepositionen mittels des automatischen Transferarms.

Dies hat den Vorteil, dass die Küvette zunächst in eine der Aufnahmepositionen verbracht werden kann, um dort als Vorrat vorgehalten zu werden. Bei entsprechendem Bedarf kann dann die Küvette in eine andere Aufnahmeposition verbracht werden, in der innerhalb der Küvette z.B. eine Probe analysiert werden kann.

Unter einer "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

Bei einer Messküvette handelt es sich beispielsweise um eine Küvette oder ein Reaktionsgefäß aus Glas, Kunststoff oder Metall. Vorteilhafterweise ist die Messküvette aus optisch transparenten Materialien gefertigt, was besonders beim Einsatz von optischen Analyseverfahren vorteilhaft sein kann. Küvetten weisen beispielsweise eine Breite oder einen Durchmesser in ihrem Querschnitt sowie eine Höhe auf. Die Ausdehnung des Querschnitts ist dabei bevorzugt kleiner als die Ausdehnung der Höhe, ähnlich der Form eines Röhrchens.

Die Begriffe "Messküvette" und "Küvette" werden synonym verwendet.

### Die Erfindung wird anhand von Zeichnungen exemplarisch näher erläutert. Darin zeigen:

FIG 1 schematisch den Aufbau des Vereinzelungssystems (1) mit einem Behälter (5), einer ersten (6) und einer zweiten (8) Trennwand,
FIG 2 schematisch eine Aufsicht auf das Vereinzelungssystem (1) mit dem Behälter (5),
FIG 3 schematisch eine Aufsicht auf eine Detailansicht des Vereinzelungssystem (1),
FIG 4 schematisch eine Seitenansicht von Details des aktiven Bereichs (4) eines Vereinzelers (3).

### Gleiche Teile sind in allen Figuren mit denselben Bezugszeichen versehen.

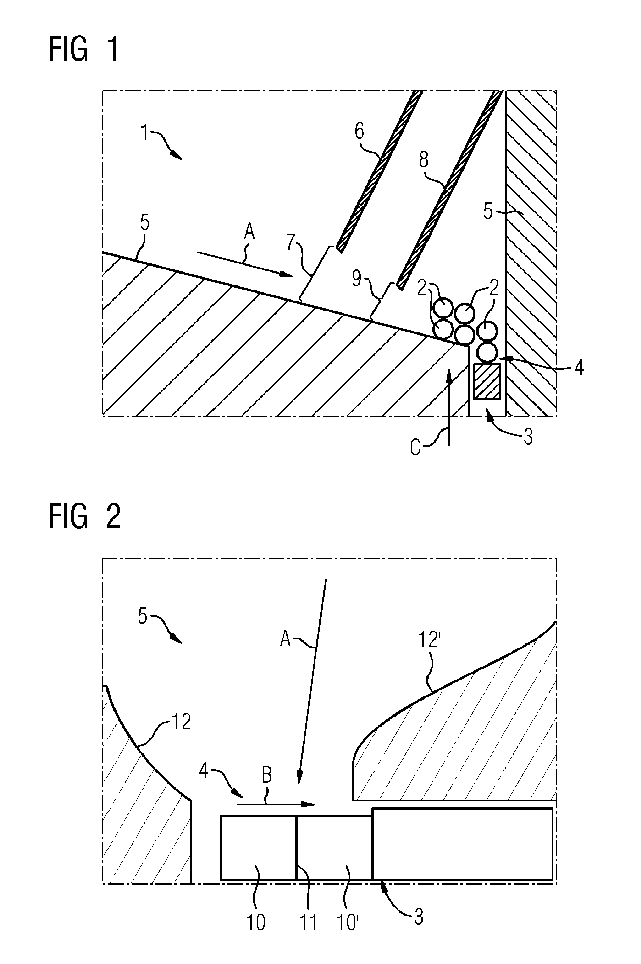

Das Vereinzelungssystem (1) gemäß FIG 1 ist eingebettet in ein nicht näher dargestelltes Analysegerät, welches zur Ausführung einer Vielzahl von Analysen von Proben ausgestaltet ist. Dazu umfasst das automatische Analysegerät eine Vielzahl von nicht gezeigten Pipettiereinrichtungen und Transporteinrichtungen sowie weiterhin eine Steuereinheit zum automatisierten Auswerten der Analysen.

Das Vereinzelungssystem (1) umfasst einen Behälter (5) mit einer Bodenfläche und einen Vereinzeler (3) mit einer Vereinzeleröffnung (4). Im Innern des Behälters (5) ist eine erste Trennwand (6) mit einer ersten unteren Kante mit einer ersten Öffnungshöhe (7) zwischen der unteren Kante der ersten Trennwand (6) und dem Bereich der Wandung des Behälters (5) angebracht, die die Bodenfläche darstellt. Zwischen der ersten Trennwand (6) und der Vereinzeleröffnung (4) ist eine zweite Trennwand (8) angeordnet mit einer zweiten Öffnungshöhe (9) zwischen der unteren Kante der zweiten Trennwand (8) und der Wandung des Behälters (5), die die Bodenfläche darstellt. Die erste Öffnungshöhe (7) ist dabei größer als die zweite Öffnungshöhe (9). Dargestellt sind weiter eine Mehrzahl von Küvetten (2), die sich im Bereich zwischen der zweiten Trennwand (8) und der Vereinzeleröffnung (4) des Vereinzelers (3) befinden und die Richtung A, die die Hauptflussrichtung der Küvetten (2) in Richtung der Vereinzeleröffnung (4) des Vereinzelers (3) im Behälter (5) angibt. Die zweite Öffnungshöhe (9) ist etwas größer als der eineinhalbfache Durchmesser des Querschnitts einer der Küvetten (2).

FIG 2 zeigt schematisch eine Aufsicht auf das Vereinzelungssystem (1). Die Wandflächen (12, 12') im Innern des Behälters (5) sind so ausgestaltet, dass sie keine Fläche senkrecht zur Richtung A, die die Hauptflussrichtung der Gegenstände in Richtung der Vereinzeleröffnung (4) des Vereinzelers (3) angibt, aufweisen. Weiter sind der Vereinzeler (3) mit der Vereinzeleröffnung (4) dargestellt. Der aktive Bereich des Vereinzelers (3) umfasst eine Schaufel mit zwei Flächen (10, 10') und einer Stufe (11). Die Schaufel wird automatisch von einem Motor getrieben bewegt und führt während des Betriebs des Vereinzelers (3) eine Hubbewegung um eine Achse aus, wobei die Hubbewegung Anteile in Richtung B und in Richtung C aufweist. Die Richtung C zeigt senkrecht aus der Zeichenebene heraus (nicht gezeigt).

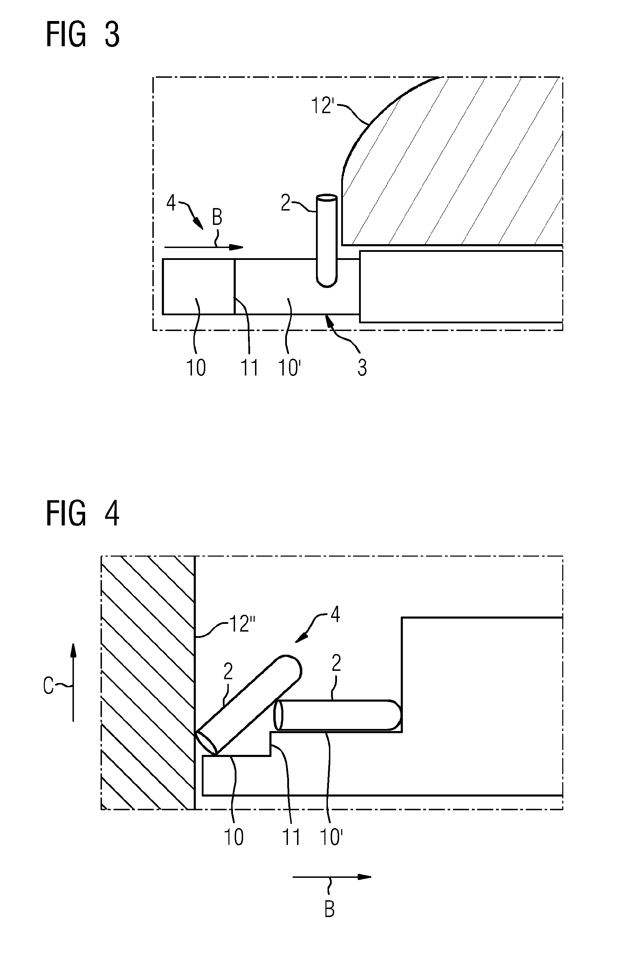

FIG 3 zeigt schematisch eine Aufsicht auf eine Detailansicht des Vereinzelungssystems (1). Dargestellt ist ein Teil des Vereinzelers (3) mit der Vereinzeleröffnung (4), der Wandfläche (12') sowie des aktiven Bereichs des Vereinzelers (3). Eine Küvette (2) liegt teilweise auf der Fläche (10') der Schaufel des aktiven Bereichs. Die Ausdehnung der Fläche (10) in Richtung B ist kleiner als die Höhe der Küvette (2). Bei Bewegung der Schaufel wird die Küvette (2) aufgrund der Ausgestaltung der Wand (12') gedreht und kommt vollständig auf der Fläche (10') zu liegen und kann dann weiter prozessiert werden.

FIG 4 zeigt schematisch eine Seitenansicht von Details des aktiven Bereichs des Vereinzelers (3) mit der Vereinzeleröffnung (4). Dargestellt ist die Schaufel mit den Flächen (10, 10') und der zwischen den Flächen liegenden Stufe (11) und eine Wandfläche (12"). Zwei Küvetten (2) sind dargestellt, von denen eine flach auf der Fläche (10') liegt. Die andere Küvette (2) liegt auf der Fläche (10) und auf der Küvette (2), die sich auf der Fläche (10') befindet, und ist aufgrund der Stufe (11) zu den Flächen (10, 10') geneigt. Die Ausdehnung der Fläche (10) in Richtung B ist kleiner als die Höhe der Küvetten (2).

### Bezugszeichenliste

- 1: Vereinzelungssystem
- 2: Küvette
- 3: Vereinzeler
- 4: Vereinzeleröffnung
- 5: Behälter
- 6: erste Trennwand
- 7: erste Öffnungshöhe
- 8: zweite Trennwand
- 9: zweite Öffnungshöhe
- 10, 10': Fläche
- 11: Stufe
- 12, 12', 12": Wandfläche
- A: Richtung
- B: Richtung
- C: Richtung

## Patentansprüche

1. Vereinzelungssystem (1) umfassend einen Behälter (5) für eine Mehrzahl von Gegenständen und einen Vereinzeler (3) mit einer Vereinzeleröffnung (4) zum Vereinzeln der Gegenstände, der Behälter (5) umfassend eine Bodenfläche und eine erste Trennwand (6) mit einer ersten unteren Kante innerhalb des Behälters (5) mit einer ersten Öffnung zwischen der ersten unteren Kante und der Bodenfläche mit einer ersten Öffnungshöhe (7),
**dadurch gekennzeichnet, dass** der Behälter (5) eine zweite Trennwand (8) mit einer zweiten unteren Kante innerhalb des Behälters (5) mit einer zweiten Öffnung zwischen der zweiten unteren Kante und der Bodenfläche mit einer zweiten Öffnungshöhe (9) umfasst, wobei die zweite Trennwand (8) zwischen der ersten Trennwand (6) und der Vereinzeleröffnung (4) des Vereinzelers (3) angeordnet ist und wobei die zweite Öffnungshöhe (9) geringer als die erste Öffnungshöhe (7) ist.

2. Vereinzelungssystem (1) nach Anspruch 1, wobei die erste Trennwand (6) und die zweite Trennwand (8) parallel zueinander angeordnet sind.

3. Vereinzelungssystem (1) nach einem der vorhergehenden Ansprüche, wobei die zweite Trennwand (8) an die erste Trennwand (6) angebaut ist.

4. Vereinzelungssystem (1) nach einem der vorhergehenden Ansprüche, wobei es sich bei den Gegenständen um Küvetten (2) handelt.

5. Vereinzelungssystem (1) nach einem der vorhergehenden Ansprüche, wobei das Vereinzelungssystem (1) einen Aktuator umfasst.

6. Vereinzelungssystem (1) nach Anspruch 5, wobei der Aktuator am Behälter (5) gefestigt ist, bevorzugt an der Außenseite des Behälters (5).

7. Vereinzelungssystem (1) nach einem der vorhergehenden Ansprüche, wobei der Vereinzeler (3) einen aktiven Bereich umfasst und wobei der aktive Bereich des Vereinzelers (3) zwei zueinander parallele Flächen mit mindestens einer dazwischenliegenden Stufe umfasst.

8. Vereinzelungssystem (1) nach einem der vorhergehenden Ansprüche, wobei der Behälter (5) trichterförmig ausgestaltet ist.

9. Vereinzelungssystem (1) nach einem der vorhergehenden Ansprüche, wobei der Behälter (5) im Innern keine Wandfläche senkrecht zur Hauptflussrichtung der Gegenstände in Richtung der Vereinzeleröffnung (4) des Vereinzelers (3) umfasst.

10. Vereinzelungssystem (1) nach einem der vorhergehenden Ansprüche, wobei sich die Gegenstände aufgrund der Gravitationskraft innerhalb des Behälters (5) in Richtung der Vereinzeleröffnung (4) des Vereinzelers (3) bewegen.

11. Automatisches Analysegerät umfassend mindestens ein Vereinzelungssystem (1) nach einem der vorhergehenden Ansprüche.

12. Automatisches Analysegerät nach Anspruch 11 umfassend mindestens eine Aufnahmeposition für eine Küvette (2), bevorzugt mindestens zwei Aufnahmepositionen für jeweils eine Küvette (2).

13. Automatisches Analysegerät nach Anspruch 12 umfassend einen automatischen Roboterarm zum Transfer einer Küvette (2).

14. Verfahren zum Vereinzeln von Küvetten in einem automatischen Analysegerät nach einem der Ansprüche 12 oder 13, umfassend die Verfahrensschritte
- Befüllen des Behälters (5) des Vereinzelungssystems (1) mit einer Mehrzahl von Küvetten (2) und
- Vereinzelung einer Küvette (2) mittels des Vereinzelers (3) und
- Verbringen der Küvette (2) in eine erste Aufnahmeposition.

15. Verfahren zum Vereinzeln von Küvetten nach Anspruch 14, umfassend weiter den Verfahrensschritt
- Transfer der Küvette (2) von der ersten Aufnahmepositionen in eine zweite Aufnahmeposition.
